# EUROPÄISCHE PATENTSCHRIFT

(11) **EP 2 138 385 B1**
(45) Veröffentlichungstag und Bekanntmachung des Hinweises auf die Patenterteilung: **14.10.2015**
(21) Anmeldenummer: 09006870.1
(22) Anmeldetag: 22.05.2009
(51) Int. Cl.: B62D 29/04, B29C 63/02, B29L 31/30

(54) **Fahrzeugbauteil, Verfahren zu dessen Herstellung und Verwendung desselben**
Vehicle component, method for manufacture and use of same
Composant de véhicule, son procédé de fabrication et son utilisation

(30) Priorität: 24.06.2008 DE 102008029905
(43) Veröffentlichungstag der Anmeldung: 30.12.2009
(73) Patentinhaber: Bayerische Motoren Werke Aktiengesellschaft, 80809 München (DE)
(72) Erfinder: Conze, Michael, 85416 Langenbach (DE); Germowitz, Peter, 84036 Landshut (DE)

(56) Entgegenhaltungen:
- DE-A1- 10 211 654
- DE-U1- 29 814 711
- US-A1- 2008 100 100

## Beschreibung

Die Erfindung bezieht sich auf Fahrzeugbauteil nach dem Oberbegriff des Anspruchs 1, ein Verfahren zu dessen Herstellung und dessen Verwendung.

Die Lackierung eines Kraftfahrzeuges muss höchsten Anforderungen genügen. Sie soll eine hohe mechanische Beständigkeit und Witterungstabilität aufweisen. Die optischen Eigenschaften wie Glanz und Farbton müssen unter den Belastungen von Wetter und anderen Umwelteinflüssen, Reinigung und hohen Temperaturschwankungen über einen langen Zeitraum erhalten bleiben. Die Stahl- oder Metallkarosse, aber auch die Kunststoffteile, wie Stoßfänger eines Automobils weisen daher einen mehrschichtigen Lackaufbau auf, u. a. mit einem Decklack und einem Einbrenn-Klarlack als oberster Schicht.

Aus DE 298 14 711 U1 ist ein Fahrzeugbauteil wie beispielweise eine Karosseriebeplankung bekannt, auf die eine Folie mit einer Klebstoffschicht aufgeklebt ist.

Aus WO 2004/028709 A2 ist ein Schutzfilm bekannt, der eine Folie mit einer Klebstoffschicht auf einem abziehbaren Papier aufweist.

Die farblose Folie kann zum Schutz des Lacks des Fahrzeugs vor Steinschlag, z. B. im unteren Karosseriebereich, wie dem Türschweller, aufgeklebt werden.

Für die Lackierung eines Kraftfahrzeuges, einschließlich der Kunststoffteile ist eine Lackieranlage mit hohen Investitionskosten erforderlich. Ein weiteres Problem stellt die Umweltbelastung durch die Lackieranlage dar. Aufgabe der Erfindung ist es daher, ein Fahrzeugbauteil aus Kunststoff, ohne es lackieren zu müssen, mit einer Schutzschicht zu versehen, die in allen Eigenschaften mit einer Einbrennlackierung zumindest gleichwertig ist.

Diese Aufgabe wird erfindungsgemäß durch das Fahrzeugbauteil gemäß Anspruch 1 und durch das Verfahren gemäß Anspruch 6 gelöst. Überraschenderweise wird nämlich durch Aufkleben einer transparenten Folie auf die Kunststoffoberfläche des Fahrzeugbauteils ein Schutz des Fahrzeugbauteils erreicht, der es in allen Aspekten mit einer Einbrennlackierung aufnehmen kann.

Erfindungsgemäß werden eingefärbte Kunststoff-Fahrzeugbauteile mit der mit einer Klebstoffschicht versehenen Folie beschichtet.

Dabei werden transparente und farblose Folien verwendet, um dem eingefärbten Kunststoff-Fahrzeugbauteil Glanz und Tiefe wie durch einen Automobil-Klarlack zu verleihen. Die Folie kann jedoch auch nur teilweise transparent, also teilweise opak sein, falls dies z. B. aus dekorativen Gründen erwünscht ist.

Erfindungsgemäß werden Folien auf Polyolefin-Basis verwendet, also z. B. aus Polyethylen oder Polypropylen sowie deren Blends und Copolymere, wie z. B. EPDM (Ethylen-Propylen-Dien-Terpolymer), ferner Copolymere von Polyolefinen mit z. B. Styrol-, Vinyl- oder Acryl-Gruppierungen, wie ABS (Acrylnitril-Butadien-StyrolCopolymer).

Folien auf Polyolefin-Basis führen zu einem ausgezeichneten Schutz des thermoplastischen Fahrzeugbauteils gegen mechanische Beschädigungen und Umwelteinflüsse. Zudem verleihen sie dem eingefärbten thermoplastischen Fahrzeugbauteil einen hohen Glanz und eine große Tiefe.

Ferner halten Polyolefine-Folien ihren farblosen Zustand praktisch unbegrenzt bei, neigen also nicht zum Vergilben oder zu einem Abbau und damit einer Farbverschiebung oder dergleichen Veränderung des Erscheinungsbildes des eingefärbten Fahrzeugbauteils. Zudem besitzen Polyolefin-Folien eine hervorragende chemische Beständigkeit, beispielsweise auch gegenüber starken Laugen. Zudem wird das eingefärbte Kunststoff-Fahrzeugbauteil durch die aufgeklebte Folie auch vor UV geschützt. Gegebenenfalls kann der Folie und/oder dem Kunststoff, aus dem das Fahrzeugbauteil hergestellt wird, auch ein W-Schutzmittel zugesetzt werden.

Die Dicke der Folie kann beispielsweise 50 bis 500 µm betragen, vorzugsweise liegt sie zwischen 100 und 400 µm.

Die Klebstoffschicht, mit der die Folie versehen ist, wird vorzugsweise durch einen druckempfindlichen Klebstoff gebildet. Der Klebstoff ist vorzugsweise transparent und farblos. Dabei kann es sich um einen beliebigen Klebstoff handeln, der die verwendete Kunststofffolie mit dem Kunststoff-Fahrzeugbauteil fest verbindet. Vorzugsweise besteht die Klebstoffschicht aus einem Acrylat-Klebstoff oder einem Ethylen-Vinyl-Acetat- oder Silikon- oder einem Kautschuk-Klebstoff. Die Schichtdicke der Klebstoffschicht ist allein von der erforderlichen Haftung der Folie an dem Bauteil abhängig.

Der Klebstoff muss dabei mit der Folie und dem Kunststoff-Fahrzeugbauteil verträglich sein. So haben sich für Folien auf Polyolefin-Basis und Fahrzeugbauteile aus thermoplastischen Polyolefinen, insbesondere Acrylat-Klebstoffe als geeignet erwiesen.

Das Kunststoff-Fahrzeugbauteil kann aus einem thermoplastischen Kunststoff oder einem Duroplasten bestehen.

Das thermoplastische Fahrzeugbauteil besteht vorzugsweise ebenfalls aus einem Thermoplasten auf Polyolefin-Basis, insbesondere Polyethylen, Polypropylen sowie deren Blends und Copolymere, einschließlich Copolymerer von Olefinen mit z. B. Styrol,- Vinyl- oder Acryl-Gruppierungen, wie ABS. Zudem kann das thermoplastische Bauteil auch aus anderen thermoplastischen Kunststoffen bestehen, insbesondere Polycarbonat (PC), Polymethylmethacrylat (PMM) sowie deren Blends und Copolymeren, beispielsweise PC mit PBT (Polybutylenterephthalat) oder mit ABS.

Das thermoplastische Fahrzeugbauteil kann beispielsweise durch Spritzgießen, Extrusion, Thermoformen, Spritzprägen oder RIM (Reaction Injection Molding) hergestellt werden. Das thermoplastische Fahrzeugbauteil kann insbesondere auch faserverstärkt ausgebildet und dazu beispielsweise durch R-RIM (Reinforced RIM) hergestellt sein.

Das erfindungsgemäße Kunststoff-Bauteil kann auch aus einem Duroplasten bestehen, z. B. Expoxy-Harz oder PolyurethanHarz und gegebenenfalls faserverstärkt sein, z. B. mit Glas-, Natur-, Aramid-, Thermoplast- oder Kohlenstoff-Fasern. Die Herstellung des erfindungsgemäßen duroplastischen Fahrzeugbauteils kann z. B. nach dem Resin Transfer Molding (RTM)-, dem Vakuum-Injektions- oder Sheet-Molding-Compound (SMC)-Verfahren erfolgen.

Zum Einfärben des thermoplastischen Bauteils können Farbpigmente verwendet werden, wie sie für Automobildecklacke Verwendung finden.

Das eingefärbte Kunststoff-Fahrzeugbauteil kann ein Exterieur-Bauteil sein, beispielsweise die Karosseriebeplankung, Stoßfänger und dergleichen.

Das Kunststoff-Fahrzeugbauteil kann auch aus einem transparenten Kunststoff bestehen, beispielsweise einem thermoplastischen Kunststoff auf Polycarbonat-, Polyacryl-, z. B. PMMA- oder Polyamid-Basis.

Damit kann beispielsweise auch das Schiebedach des Fahrzeugs erfindungsgemäß ausgebildet werden, also aus einem transparenten thermoplastischen Kunststoff bestehen, der erfindungsgemäß mit einer mit einer Klebstoffschicht versehenen, transparenten Folie beschichtet ist. Ferner können andere transparente Exterieur-Teile des Fahrzeugs, beispielsweise das Gehäuse der Leuchten, wie der Brems- oder Rückleuchte, erfindungsgemäß ausgebildet sein.

Die zum Aufkleben bestimmte Folie wird vorzugsweise mit einer abziehbaren Trägerschicht z. B. aus Papier auf der Klebstoffschicht eingesetzt.

Das Aufkleben der Folie kann auf unterschiedliche Weise erfolgen, beispielsweise durch Kaschieren. Dazu wird ein Zuschnitt der Folie nach dem Abziehen der Trägerschicht, also des Papiers, auf das zu beschichtende Kunststoff-Fahrzeugbauteil gelegt, um dann durch Streichen der Folie von innen nach außen z. B. mit einem Rakel, einer Walze oder dergleichen die Folie mit dem Bauteil zu verbinden. Auf diese Weise können auch komplexere Bauteile mit Erhebungen, Vertiefungen, Durchbrüchen und dergleichen kaschiert werden.

Nach einem anderen Verfahren, das insbesondere für flache Fahrzeugbauteile bestimmt ist, wird ein Walzwerk mit wenigstens zwei an ihrer Oberfläche gummielastisch ausgebildeten, vorzugsweise aufeinander zu belastete Walzen verwendet, zwischen denen das Kunststoff-Fahrzeugbauteil und die mit der Klebstoffschicht versehene Folie hindurch geführt werden, um sie durch Aneinanderpressen miteinander zu verbinden.

Die Erfindung ist durch den Entfall der Lackierung der Kunststoffaußenhaut eines Fahrzeuges, insbesondere Kraftfahrzeuges gekennzeichnet. Das erfindungsgemäße Fahrzeugbauteil entspricht aber trotzdem in allen Anforderungen einer herkömmlichen Automobil-Lackierung. Es kann jedoch auf eine Lackieranlage und die damit verbundenen hohen Kosten verzichtet werden. Zudem treten keine Umweltprobleme auf.

## Patentansprüche

1. Fahrzeugbauteil aus einem Kunststoff, das mit einer zumindest teilweise transparenten Schutzschicht versehen ist, die aus einer auf das Kunststoffbauteil aufgeklebten Folie besteht, die mit einer Klebstoffschicht versehen ist, **dadurch gekennzeichnet, dass** der Kunststoff ein eingefärbter Kunststoff ist und die Folie eine farblose Folie auf Polyolefin-Basis ist.

2. Fahrzeugbauteil nach Anspruch 1, **dadurch gekennzeichnet, dass** der Kunststoff ein thermoplastischer Kunststoff auf Polyolefin-, Polycarbonat- oder Polyacrylat-Basis ist.

3. Fahrzeugbauteil nach einem der vorstehenden Ansprüche, **dadurch gekennzeichnet, dass** die Klebstoffschicht aus einem druckempfindlichen Klebstoff besteht.

4. Fahrzeugbauteil nach einem der vorstehenden Ansprüche, **dadurch gekennzeichnet, dass** die Klebstoffschicht aus einem Klebstoff auf Polyacrylat-Basis besteht.

5. Fahrzeugteil nach Anspruch 1, **dadurch gekennzeichnet, dass** der Kunststoff ein zumindest teilweise transparenter thermoplastischer Kunststoff ist.

6. Verfahren zur Herstellung des Fahrzeugbauteils nach einem der vorstehenden Ansprüche, **dadurch gekennzeichnet, dass** auf das Kunststoff-Fahrzeugbauteil eine mit einer Klebstoffschicht versehene, zumindest teilweise transparente Folie aufgeklebt wird.

7. Verfahren nach Anspruch 6, **dadurch gekennzeichnet, dass** das Kunststoff-Fahrzeugbauteil und die mit der Klebstoffschicht versehene Folie zwischen wenigstens zwei an ihrer Oberfläche gummielastisch ausgebildeten Walzen hindurch geführt werden, um sie durch Aneinanderpressen zu verbinden.

8. Verwendung des Fahrzeugbauteils nach einem der Ansprüche 1 bis 5 als Außenbeplankung der Fahrzeugkarosserie.

9. Verwendung des Fahrzeugbauteils nach Anspruch 5 für Schiebedächer oder transparente Teile der Leuchten des Fahrzeugs.

## Claims

1. A plastics material vehicle component under an at least partly transparent protective layer comprising a film stuck to the plastics material component and comprising an adhesive layer, **characterised in that** the plastics material is inked and the film is a colourless film on a polyolefin base.

2. A vehicle component according to claim 1, **characterised in that** the plastics material is a thermoplastics material based on polyolefin, polycarbonate or polyacrylate.

3. A vehicle component according to any of the preceding claims, **characterised in that** the adhesive layer is pressure-sensitive.

4. A vehicle component according to any of the preceding claims, **characterised in that** the adhesive layer is polyacrylate-based.

5. A vehicle component according to claim 1, **characterised in that** the adhesive is an at least partly transparent thermoplastics material.

6. A method of producing the vehicle component according to any of the preceding claims, **characterised in that** an at least partly transparent film comprising an adhesive layer is stuck to the plastics material component.

7. A method according to claim 6, **characterised in that** the plastics material component and the film with the adhesive layer are conveyed between at least two rubber-surfaced rollers in order to join them by pressing together.

8. Use of the vehicle component according to any of claims 1 to 5 for the exterior panelling of the vehicle body.

9. Use of the vehicle component according to claim 5 for sliding roofs or transparent parts of the vehicle lights.

## Revendications

1. Composant de véhicule, en matière plastique, muni d'au moins une couche protectrice partiellement transparente constituée d'un film collé sur le composant en matière plastique, ce film étant muni d'une couche adhésive,
composant **caractérisé en ce que**
la matière plastique est une matière plastique teintée et le film est un film incolore à base de polyoléfine.

2. Composant de véhicule selon la revendication 1,
**caractérisé en ce que**
la matière plastique est une matière thermoplastique, à base de polyoléfines, polycarbonate ou polyacrylate.

3. Composant de véhicule selon l'une des revendications précédentes,
**caractérisé en ce que**
la couche adhésive est un adhésif sensible à la pression.

4. Composant de véhicule selon l'une des revendications précédentes,
**caractérisé en ce que**
la couche adhésive est un adhésif à base de polyacrylate.

5. Composant de véhicule selon la revendication 1,
**caractérisé en ce que**
la matière plastique est une matière thermoplastique au moins partiellement transparente.

6. Procédé de fabrication d'un composant de véhicule selon l'une des revendications précédentes,
**caractérisé en ce qu'**
on colle un film au moins partiellement transparent muni d'une couche adhésive sur le composant de véhicule en matière plastique.

7. Procédé selon la revendication 6,
**caractérisé en ce que**
le composant en matière plastique et le film muni de la couche adhésive passent entre au moins deux cylindres dont la surface a l'élasticité du caoutchouc pour les relier en les pressant l'un contre l'autre.

8. Utilisation du composant de véhicule selon l'une des revendications 1 à 5, comme habillage extérieur de carrosserie de véhicule.

9. Utilisation du composant de véhicule selon la revendication 5, pour les toits coulissants ou des parties transparentes de feux de véhicule.
